**Europäisches Patentamt**

**European Patent Office**

**Office européen des brevets**

(19)

(11) Veröffentlichungsnummer: **0 047 387 B1**

(12)

# EUROPÄISCHE PATENTSCHRIFT

(45) Veröffentlichungstag der Patentschrift:
27.12.84

(51) Int. Cl.³: **B 29 D 17/00**

(21) Anmeldenummer: 81105879.1

(22) Anmeldetag: 24.07.81

(54) **Verfahren zur Herstellung optisch auslesbarer Informationsträger.**

(30) Priorität: **30.07.80 DE 3028947**

(43) Veröffentlichungstag der Anmeldung:
17.03.82 Patentblatt 82/11

(45) Bekanntmachung des Hinweises auf die Patenterteilung:
27.12.84 Patentblatt 84/52

(84) Benannte Vertragsstaaten:
AT BE CH FR GB IT LI LU NL SE

(56) Entgegenhaltungen:
CH - A - 404 184
DE - A - 1 504 974
DE - B - 1 096 054
DE - B - 1 947 630
DE - B - 2 027 880
US - A - 3 039 139

(73) Patentinhaber: **POLYGRAM GmbH, Harvestehuder Weg 1-4, D-2000 Hamburg 13 (DE)**

(72) Erfinder: **Bartholdtsen, Dieter, Ing.grad., Rothaarweg 21, D-3000 Hannover 51 (DE)**
Erfinder: **Koop, Hermann, Dr. Dipl.-Chem., Bachstelzenweg 10, D-3003 Ronnenberg 1 (DE)**
Erfinder: **Schrode, Erhard, Ing.grad., Steingartenweg 10, D-3160 Lehrte (DE)**
Erfinder: **Zielasek, Adelbert, Dr. Dipl.-Phys., Rhadener Weg 30, D-3006 Burgwedel (DE)**

(74) Vertreter: **Mehl, Ernst, Dipl.-Ing., Postfach 22 01 76, D-8000 München 22 (DE)**

## Beschreibung

Die Erfindung bezieht sich auf ein Verfahren zur Herstellung plattenförmiger, optisch auslesbarer Informationsträger insbesondere hoher Speicherdichte aus transparenten Kunststoffen, beispielsweise Polyvinylchlorid, Polymethylmethacrylat, Polycarbonat Polysulfon ect. unter Verwendung einer mit wenigstens einer Pressmatrize beschickten Formpresse, deren beide gegeneinander bewegbare Formhälften zur Begrenzung des Formhohlraumes einander gegenüberstehende ringförmige, einen Quetschspalt realisierende Stege aufweisen, bei dem im Zuge eines Presszyklus aufeinanderfolgend das breiförmige Kunststoffmaterial über eine Mittelöffnung einer Formhälfte klossbildend in die zu einem Spalt geöffnete aufgeheizte Pressform eingespritzt, durch Schliessen der Pressform zu einer Speicherplatte ausgeformt und diese Speicherplatte nach Abkühlen und Öffnen der Pressform dieser entnommen wird.

Kunststoff-Pressverfahren zur Herstellung von plattenförmigen Informationsträgern sind beispielsweise durch die US-PS 3 039 139 bekannt. Weiterhin ist es durch die CH-PS 404 184 bei einem Verfahren der obengenannten Art bekannt, zum Beispiel bei der Herstellung von ein Oberflächen-Rillenprofil besitzenden Schallplatten aus thermoplastischen Kunststoffen so vorzugehen, dass ein plastischer Materialkuchen zwischen eine teilweise geöffnete Form gebracht und diese nachträglich geschlossen wird, wobei überflüssiges Material zwischen den Formteilen ausgetrieben und abgequetscht wird.

Die Entwicklung optisch auslesbarer Informationsträger mit sehr hoher Speicherdichte, wie sie z.B. für Videoaufzeichnungen und neuerdings auch für digitale Audioaufzeichnungen bekannt geworden sind, stellen an Herstellungsverfahren durch Pressen hohe Anforderungen bezüglich Planität und optische Eigenschaften der gefertigten Speicherplatten. Wie sich zeigt, können für das Pressen solcher Informationsträger thermoplastische Materialien ausreichend niedriger Glastemperatur herangezogen werden. Jedoch ist z.B. bei Platten aus üblicherweise verwendetem PVC/PVA-Copolymer die Formbeständigkeit bei höheren Temperaturen nicht mehr gewährleistet. Bei Platten aus dem nur wenig wärmestabileren PMMA ergeben sich zudem Probleme wegen der übermässigen Feuchtempfindlichkeit des Materials, die u.U. eine Sandwich-Konstruktion der VLP-Platte aus zwei informationsseitig aneinandergeklebten Platten erforderlich machen, was besonders kostennachteilig für kürzere, auf einer Plattenseite unterbringbare Informationsprogramme ist. Beide Plattenarten erfordern zur Gewährleistung ihrer Planität auch nach Lagerung eine aufwendigere Verpackung als im Schallplattenbereich üblich.

Bei der Verarbeitung thermoplatischer Materialien hoher Glastemperatur lässt sich eine bessere Formbeständigkeit erreichen, so dass Sandwichkonstruktion und spezielle Verpackungsmassnahmen nicht erforderlich sind.

Jedoch ergeben sich bei der Herstellung solcher Platten Schwierigkeiten im Hinblick auf Unebenheiten und insbesondere hinsichtlich optischer Doppelbrechungs-Effekte. Solche Doppelbrechungs-Effekte haben beim optischen Auslesen der in Form von Pits in eine Plattenoberseite eingeprägten Information eine unerwünschte Modulation der Lichtquelle, in der Regel ein Laser, zur Folge, durch die die einwandfreie Wiedergabe der gespeicherten Information gestört wird.

Der Erfindung liegt die Aufgabe zugrunde, für ein Pressverfahren der einleitend beschriebenen Art eine Lösung anzugeben, die es gestattet, formbeständige Thermoplaste zur Herstellung optisch auslesbarer Speicherplatten hoher Informationsdichte herzustellen, die neben der zu fordernden Planität auch frei sind von störenden Doppelbrechungs-Effekten.

Diese Aufgabe wird gemäss der Erfindung dadurch gelöst, dass die Einspritztemperatur des zur Speicherplatte auszupressenden Kunststoffes die Presstemperatur der Pressform erheblich überschreitet, dass ferner das Auspressen des Materialklosses durch Schliessen der Pressform bis auf eine Quetschspaltbreite in der Grössenordnung von etwa 50% der Dicke der fertigen Speicherplatte erfolgt und bereits vor Abschluss des Materialeinspritzvorgangs einsetzt und nachfolgend der Kühlvorgang vor Abschluss des Auspressvorgangs gestartet wird und dass der zeiliche Ablauf des Schliess- und des Kühlvorganges in erster Näherung jeweils nach einer Exponentialfunktion mit anfänglich grosser Schliessgeschwindigkeit und Temperarurveränderung verläuft.

Der Erfindung liegt die Erkenntnis zugrunde, dass die erwähnten Unebenheiten und Doppelbrechungs-Effekte durch Einwirken von Reibungs- bzw. Scherkräften während des Materialfliessvorgangs beim Pressen auf die Molekülstruktur verursacht werden. Durch die speziellen Massnahmen nach der Erfindung wird ein zügiger reibungsarmer Materialfluss des auszupressenden Kunststoffs gewährleistet und damit die erforderliche Qualität hinsichtlich der Doppelbrechung kleiner 15 nm/mm erzielt.

So wird durch den beschriebenen zeitlichen Verlauf des Schliess- und Kühlvorgangs erreicht, dass der beim Verpressen des in die Mitte der Form eingebrachten Materialklosses mit zunehmendem Fliessweg zunehmende Scherspannungsgradient erheblich verringert wird.

Zweckmässig wird die das zu verpressende Material plastifizierende und in die Pressform einspritzende Spritzeinheit zur Erzielung eines möglichst kurzen Materialtransportwegs in die Presse integriert. Durch den kurzen Materialtransportweg werden die Wärmeverluste des im Zuge eines Presszyklus in die Form einzuspritzenden Materialklosses ausreichend klein gehalten, was insbesondere im Hinblick auf die Ausbildung eines kleinen Temperaturgradienten über die Querschnittfläche des Materialklosses hinweg wichtig ist.

Unerwünschte Reibungs- bzw. Scherkräfte lassen sich auch dadurch in vorteilhafter Weise weiter herabsetzen, dass die Dosierung der pro Presszyklus in die Pressform einzuspritzenden Materialmenge eine Überschussmasse in der Grössenordnung von 5–8% hat. Hierdurch werden nämlich die Scherspannung erzeugenden Fliessvorgänge während des Pressvorgangs verkürzt.

Da auch Profilsprünge- bzw. sprungartige Vertiefungen, wie sie gleichsam im Mittelbereich von Schallplatten üblich sind, Anlass für unerwünschte Reibungs- bzw. Scherkräfte sind, ist es vorteilhaft, den von den Ringstegen begrenzten Formhohlraum profilsprungfrei zu gestalten. Scherspannungsbedingte Orientierungszustände der Molekülstruktur führen nämlich zu Polarisationseffekten und damit zu Doppelbrechung in den den Profilsprüngen benachbarten Bereichen.

Auch der zum Druckaufbau in der Form zwecks Vermeidung von Kondensationseffekten (Blasenbildung) üblicherweise erforderliche Profilsprung am Aussenrand verursacht Spannungszustände, die zu Doppelbrechungs-Effekten führen.

In Weiterbildung der Erfindung wird dieser Sachverhalt dadurch berücksichtigt, dass der Durchmesser des Formhohlraumes gegenüber dem Plattensolldurchmesser der zu pressenden Speicherplatte um mehrere %, z.B. 5%, vergrössert ist. Die Platte wird also um ca. 5% grösser gepresst, und der entsprechende gestörte Randbereich abgeschnitten. Um die Grösse des abzuschneidenden Randbereichs möglichst klein halten zu können, wird erfindungsgemäss die Breite des Quetschrandes anstatt auf üblicherweise 10–20% der Plattendicke auf nun ca. 50% durch die Druckringe eingestellt. Damit der Druck in der Form trotz der 50%-igen Formöffnung nach dem Auspressen zum Vermeiden der erwähnten Kondensationseffekte erhalten bleibt, wird die Kühlung erfindungsgemäss vorzeitig gestartet.

Um auch bei der Bearbeitung des Plattenrandes nach dem Entformen der Speicherplatte nicht nachträglich noch Scherspannungen auf das Material einwirken zu lassen, die in ihrer Folge die genannten Doppelbrechungs-Effekte bewirken, ist es sinnvoll, die Reduzierung des Speicherplattendurchmessers auf den Solldurchmesser mittels einer Scherkräfte weitgehend vermeidenden Schneidvorrichtung, z.B. eine Laserschneidvorrichtung, vorzunehmen.

Weitere vorteilhafte Ausgestaltungen des Verfahrens nach der Erfindung sind in den Ansprüchen 7 bis 10 angegeben.

Anhand der Zeichnung soll die Erfindung im folgenden noch näher erläutert werden.

In der Zeichnung bedeuten

Fig. 1 die schematische Darstellung einer vom Verfahren nach der Erfindung Gebrauch machenden Spritzpressvorrichtung

Fig. 2 eine Schnittzeichnung der geöffneten Pressform zu Beginn eines Presszyklus der Spritzpressvorrichtung nach Fig. 1

Fig. 3 ein weiteres Schnittbild der Pressform nach Fig. 2 in geschlossenem Zustand

Fig. 4 ein weiteres Schnittbild der Pressform nach den Figuren 2 und 3 im geöffneten Zustand am Ende eines Pressvorgangs

Fig. 5 die im Zuge eines Presszyklus hergestellte entformte Speicherplatte

Fig. 6 ein Fliessspannungsgradientendiagramm ohne Kompensation durch exponentiellen Verlauf von Formschliessung und Kühlung

Fig. 7 ein den Presszyklus näher erläuterndes Zeitdiagramm

Fig. 8 die Darstellung des Schliessweges der Pressform über der Zeit

Fig. 9 die Darstellung des Temperaturverlaufs der Pressform über der Zeit während der Kühlphase

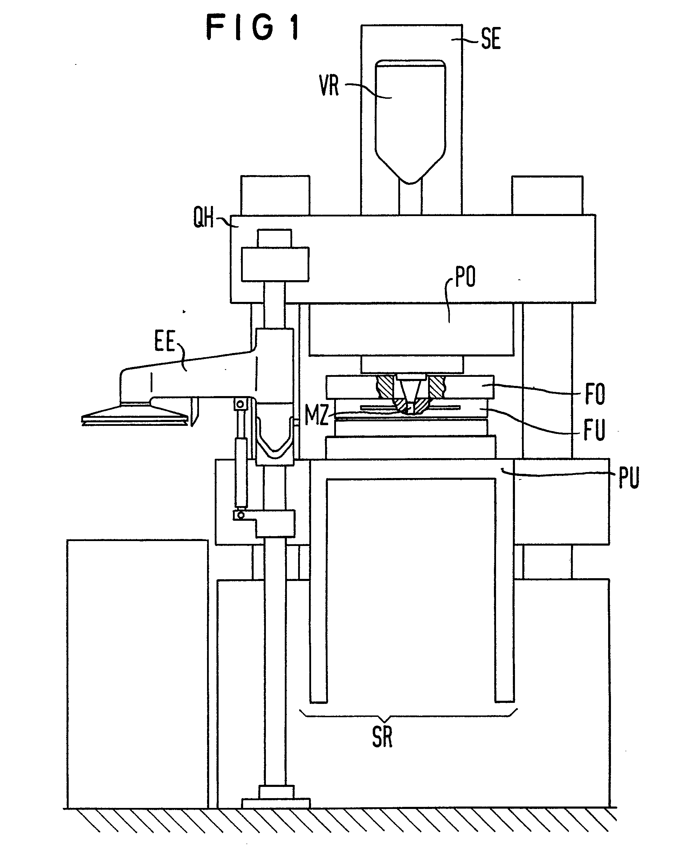

Die in Fig. 1 dargestellte Spritzpressvorrichtung weist einen Ständer SR mit einem Querhaupt QH auf, an dem das Pressoberteil PO mit dem Formoberteil FO befestigt ist. Das Pressunterteil PU mit dem Formunterteil FU ist ebenfalls am Ständer SR befestigt und gegen das Pressoberteil PO mit dem Formoberteil FO bewegbar ausgeführt. Die Spritzeinheit SE mit dem Vorratsraum VR für den Kunststoff ist unmittelbar am Querhaupt QH befestigt und auf diese Weise in die Spritzpressvorrichtung integriert. Das zu verpressende Material wird von der Spritzeinheit SE, in der es auf die nötige Arbeitstemperatur gebracht wird, durch die Materialzuführung MZ in der Mitte des Formoberteils FO in den Formhohlraum eingespritzt. Weiterhin weist die Spritzpressvorrichtung eine Entformungseinheit EE auf, die am Ende eines Presszyklus die entformten Speicherplatten entgratet bzw. auf ihren Solldurchmesser reduziert und zur Ablage bringt.

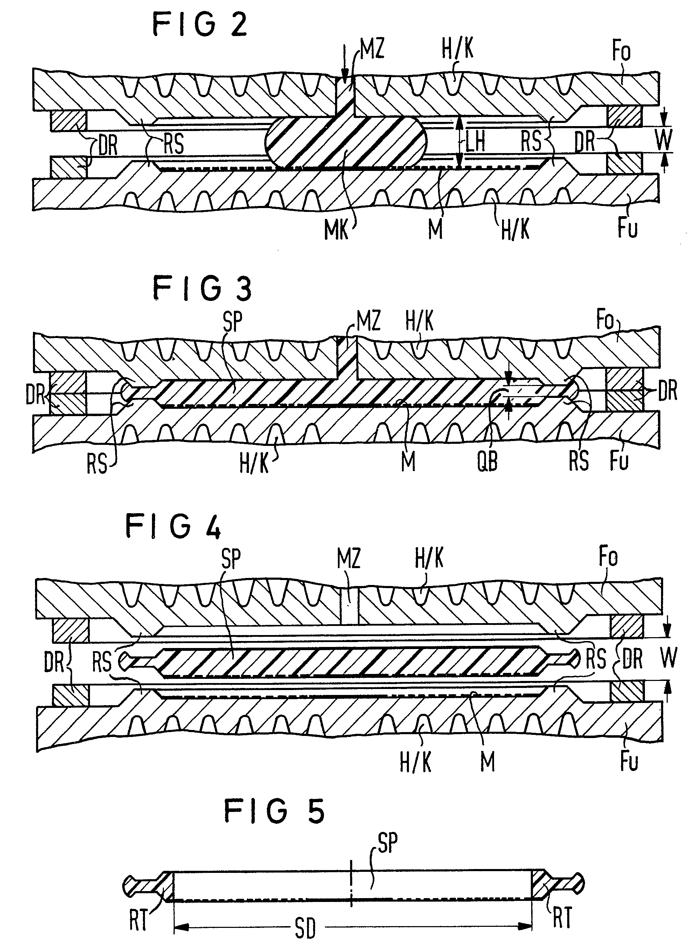

Zu Beginn eines Presszyklus sind das Formoberteil FO und das Formunterteil FU, wie Fig. 2 zeigt, um einen Spalt von der Breite W auseinandergezogen. In den hierdurch vergrösserten Formhohlraum mit der lichten Höhe LH, wird nunmehr von der Spritzeinheit durch die Materialzuführng MZ hindurch das zu verpressende Material mit einer gegenüber der Aufheiztemperatur der Pressform wesentlich höheren Temperatur zur Bildung eines Materialklosses MK eingespritzt. Das Heizen der Pressform geschieht durch die im Schnittbild angedeuteten Heiz-Kühlkanäle H/K. Wie die Fig. 2 und die weiteren Figuren 3 und 4 ferner erkennen lassen, ist der Formhohlraum durch Ringstege RS begrenzt, die in der in Fig. 3 gezeigten geschlossenen Pressform einen Quetschspalt mit der Breite QB bilden. Weiterhin weisen das Formoberteil und das Formunterteil auf ihren einander gegenüberliegenden Seiten am äusseren Rand jeweils einen Druckring DR auf. Die Druckringe DR bestimmen den gegenseitigen Abstand zwischen dem Formober- und dem Formunterteil im geschlossenen Zustand der Pressform entsprechend Fig. 3. Die die Information tragende Matrize M ist am Formunterteil FU befestigt.

Wie die Fig. 3 erkennen lässt, hat die Quetschspaltbreite QB einen Wert, der etwa 50% der Dicke der zu pressenden Speicherplatte SP beträgt. Der Quetschspalt ist dazu erforderlich, während des Pressens und im Anschluss daran während des Kühlens, innerhalb des gepressten Materials einen ausreichenden Druck aufrechtzuerhalten, um störende Kondensationseffekten (Blasenbildung) im Materialinneren zu unterdrücken. Dieser Quetschspalt, der beim üblichen Plattenpressen in der Grössenordnung von 1 bis 2 Zehntel der Plattenstärke liegt und sich im wesentlichen in Abhängigkeit vom Fliesswiderstand und vom Pressdruck einstellt, ist gemäss der Erfindung durch Druckringe DR definiert auf einen grösseren Wert eingestellt, um die Scherspannungen durch Verkürzung des kritischen Randbereichs zu verringern sowie eine Verminderung von Rückströmungen in innere Plattenbereiche zu erreichen und damit die als Folge hiervon autretenden Doppelbrechungseffekte möglichst klein zu halten. Um trotz dieser Vergrösserung der Quetschspaltbreite den für die Unterbindung von Kondensationseffekten erforderlichen Druckaufbau im Material während der Pressphase und der anschliessenden Kühlphase zu gewährleisten, muss, wie noch erläutert werden wird, dafür gesorgt werden, dass der nunmehr zu niedrige Fliesswiderstand, insbesondere im Bereich des Quetschspalts, durch rechtzeitige Erhöhung der Masseviskosität kompensiert wird.

Bevor die gepresste Platte entformt werden kann, muss durch Umschalten von Heizen auf Kühlen die Pressform gekühlt werden. Anschliessend wird die Pressform geöffnet und die Speicherplatte SP entformt. Es versteht sich von selbst, dass zum Entformen das Formunterteil FU vom Formoberteil FO über die Spaltbreite W hinaus voneinander entfernt werden kann.

Der Formhohlraum der Pressform ist hinsichtlich des Solldurchmessers SD um ca. 5% vergrössert, um, wie bereits ausgeführt worden ist, auf diese Weise unerwünschte Doppelbrechungs-Effekte im Randbereich aus dem Informationsbereich hinaus nach aussen zu verschieben. Die Reduzierung der gepressten Speicherplatte SP auf den Solldurchmesser durch Abschneiden des Randteils RT wird zweckmässig mit einer Scherkräfte weitgehend vermeidenden Schneidvorrichtung, z.B. mit einem Laserschneidgerät, vorgenommen, um nicht nachträglich noch durch Scherkräfte die Struktur der Platte am Rand zu verändern und damit im Randbereich als Folge der Entropie-Elastizität unerwünschte Polarisationserscheinungen hervorzurufen.

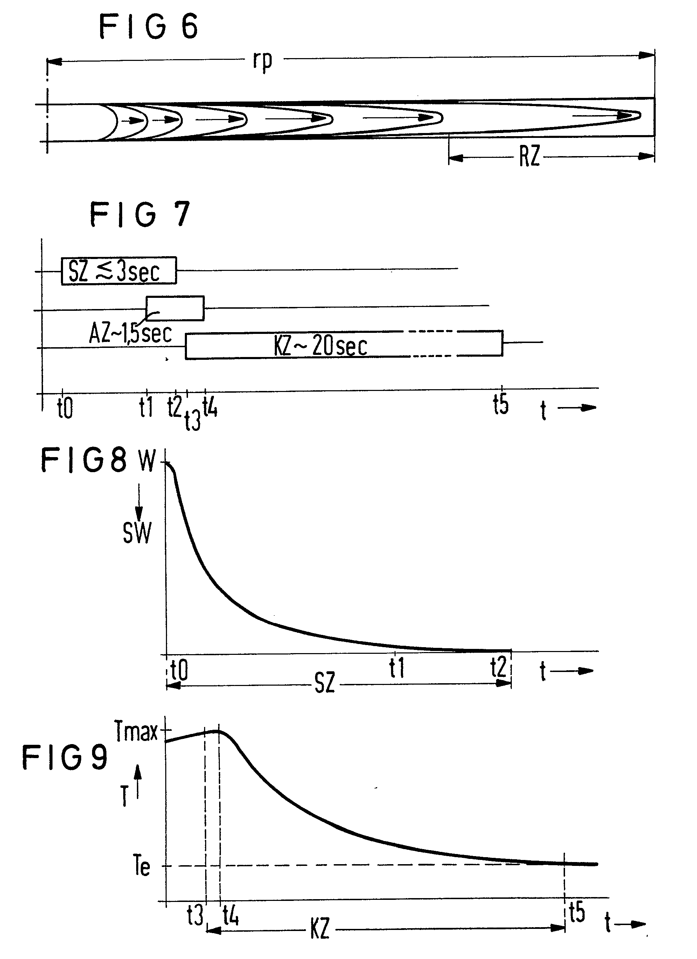

Fig. 6 zeigt, das über den Querchnitt der Speicherplatte üblicherweise vorhandene Fliessgeschwindigkeitsprofil für verschiedene Plattenradien rp. Der die Scherspannung erzeugende Fliessgeschwindigkeitsgradient nimmt, wie aus dem Diagramm ersichtlich, zum Rand hin immer mehr zu. Durch Steuerung der Schliessgeschwindigkeit nach einer Exponentialfunktion wird diese Zunahme weitestgehend kompensiert.

Wie einschlägige, der Erfindung zugrundeliegende Untersuchungen bei der Herstellung solcher Speicherplatten aus vorgetrocknetem PC-Granulat gezeigt haben, ergeben sich günstige Eigenschaften hinsichtlich der Planität der gepressten Platten und ausreichend kleinen Doppelbrechungs-Effekten, wenn der Spritz-Presszyklus in der in Diagramm der Fig. 7 dargestellten Weise abläuft. Das auf 300 °C erhitzte PC-Granulat wird in die etwa auf 220 °C vorgewärmte Pressform vom Zeitpunkt to bis zum Zeitpunkt t2 etwa innerhalb ≤ 3 sec in die bis zur Spaltbreite W geöffnete Pressform eingespritzt (Spritzzeit SZ). Die lichte Höhe (LH) des Formhohlraumes der geöffneten Pressform (FO/FU) hat dabei vorzugsweise den 4-fachen Wert der Dicke der zu pressenden Speicherplatte SP. Die Auspresszeit AZ, die bereits im Zeitpunkt t1 beginnt, also bereits ca. 25% vor Abschluss des Spritzvorgangs, dauert etwa 1,5 sec bis zum Zeitpunkt t4, Hierdurch werden Wärmeverluste möglichst gering gehalten. Wegen der thermischen Trägheit beginnt die Kühlzeit KZ bereits im Zeitpunkt t3, in dem der Auspressvorgang erst zu 2/3 abgelaufen ist. Sie beträgt etwa 20 sec bis zum Zeitpunkt t5. Der Beginn der Kühlung in einem Zeitpunkt, in dem der Auspressvorgang erst zu 2/3 abgelaufen ist, hat, wie bereits darauf hingewiesen worden ist, seinen Grund auch darin, dass der zu geringe Fliesswiderstand durch eine rechtzeitige Erhöhung der Masseviskosität wenigstens im Bereich des Quetschspalts zu kompensieren ist.

Das in Fig. 8 dargestellte Zeitdiagramm des Schliessweges SW, ausgehend von der Spaltbreite W der geöffneten Pressform, folgt über der Auspresszeit AZ in erster Näherung einer Exponentialfunktion. Mit anderen Worten ist die Schliessgeschwindigkeit zunächst ziemlich gross und wird dann immer langsamer. Auf diese Weise erfolgt eine Anpassung an das während des Pressens abkühlende Material im Sinne der klein zu haltenden Scherspannungen und Reibungs- bzw. Scherkräften.

Das Zeitdiagramm der Fig. 9 zeigt den Abfall der Temperatur T während der Kühlzeit KZ. Die Kühlphase setzt, wie Fig. 9 zeigt, bereits ein, bevor die Formtemperatur den Maximalwert Tmax erreicht hat, und verläuft dann bis zur Entformungstemperatur Te ebenfalls nach einem exponentiellen Abfall. Hieraus wird deutlich, dass die Formtemperatur im unmittelbaren Anschluss an die Auspresszeit bereits sehr schnell abfällt.

**Patentansprüche**

1. Verfahren zur Herstellung plattenförmiger, optisch auslesbarer Informationsträger, insbesondere hoher Speicherdichte, aus transparenten Kunststoffen, beispielsweise Polyvinylchlorid (PVC), Polymethylmetacrylat (PMMA), Polycarbonat (PC), Polysulfon (PS) ect. unter Verwendung einer mit wenigstens einer Pressmatrize beschickten Formpresse, deren beide gegeneinander bewegbare Formhälften (FO, FU) zur Begrenzung des Formhohlraumes einander gegenüberstehende ringförmige, einen Quetschspalt realisierende Stege (RS) aufweisen, bei dem im Zuge eines Presszyklus aufeinanderfolgend das breiförmige Kunststoffmaterial über eine Mittelöffnung (MZ) einer Formhälfte (FO) klossbildend in die zu einem Spalt geöffnete aufgeheizte Pressform eingespritzt, durch Schliessen der Pressform zu einer Speicherplatte (SP) ausgeformt und diese Speicherplatte nach Abkühlen und Öffnen der Pressform dieser entnommen wird, dadurch gekennzeichnet, dass die Einspritztemperatur des zur Speicherplatte (SP) auszupressenden Kunststoffes die Presstemperatur der Pressform (FO, FU) erheblich überschreitet, dass ferner das Auspressen des Materialklosses (MK) durch Schliessen der Pressform bis auf eine Quetschspaltbreite (QB) in der Grössenordnung von etwa 50% der Dicke der fertigen Speicherplatte erfolgt und bereits vor Abschluss des Materialeinspritzvorgangs einsetzt und nachfolgend der Kühlvorgang vor Abschluss des Auspressvorgangs gestartet wird und dass der zeitliche Ablauf des Schliess- und des Kühlvorganges in erster Näherung jeweils nach einer Exponentialfunktion mit anfänglich grosser Schliessgeschwindigkeit und Temperaturveränderung verläuft.

2. Verfahren nach Anspruch 1, dadurch gekennzeichnet dass die das zu verpressende Material plastifizierende und in die Pressform (FO, FU) einspritzende Spritzeinheit (SE) zur Erzielung eines möglichst kurzen Materialtransportweges in die Presse integriert ist.

3. Verfahren nach Anspruch 1 oder 2, dadurch gekennzeichnet dass der von den Ringstegen (RS) begrenzte Formhohlraum profilsprungfrei gestaltet ist.

4. Verfahren nach einem der vorhergehenden Ansprüche, dadurch gekennzeichnet, dass die Dosierung der pro Presszyklus in die Pressform (FO, FU) einzuspritzenden Materialmenge eine Überschussmasse in der Grössenordnung von 5–8% hat.

5. Verfahren nach einem der vorhergehenden Ansprüche, dadurch gekennzeichnet, dass der Durchmesser des Formhohlraumes gegenüber dem Plattensolldurchmesser (SD) der zu pressenden Speicherplatte (SP) um mehrere %, z.B. 5%, vergrössert ist.

6. Verfahren nach einem der vorhergehenden Ansprüche, dadurch gekennzeichnet, dass die Speicherplatte (SP) im Anschluss an den Entformungsvorgang in ihrem Plattendurchmesser mittels einer Scherkräfte weitgehend vermeidenden Schneidvorrichtung, z.B. eine Laserschneidvorrichtung, auf den Solldurchmesser (SD) reduziert wird.

7. Verfahren nach einem der vorhergehenden Ansprüche, dadurch gekennzeichnet, dass Beginn und Geschwindigkeit der Formkühlung im Zuge eines Presszyklus so gewählt sind, dass der im Bereich des relativ grossen Quetschspaltes für den Druckaufbau im zu pressenden Material zu niedrige Fliesswiderstand durch rechtzeitige Erhöhung der Masseviskosität kompensiert wird.

8. Verfahren nach einem der vorhergehenden Ansprüche, dadurch gekennzeichnet, dass die lichte Höhe (LH) der geöffneten Pressform das Mehrfache der Dicke der zu pressenden Speicherplatte (SP) beträgt.

9. Verfahren nach einem der vorhergehenden Ansprüche, unter Verwendung von vorgetrocknetem PC-Granulat, dadurch gekennzeichnet, dass das auf 300 °C aufgeheizte PC-Material in eine auf ca. 220 °C erwärmte Pressform (FO, FU) gebracht wird.

10. Verfahren nach einem der vorhergehenden Ansprüche unter Verwendung von vorgetrocknetem PC-Granulat, dadurch gekennzeichnet, dass die Einspritzzeit (SZ) in den Grenzen zwischen 0,8 sec und 3 sec, die Auspresszeit (AZ) 2 sec, die Kühlzeit (KZ) 25 sec und der Formschliessdruck ≤ 1,2 MN getragen und dass die Auspresszeit bzw. die Kühlzeit jeweils 40–20% vor Abschluss der Spritzzeit bzw. der Auspresszeit beginnen.

## Revendications

1. Procédé pour la fabrication d'un support d'informations ayant la forme d'un disque et susceptible d'être lu par voie optique, en particulier d'in support d'enregistrement à haute densité de mémorisation fait avec des matières plastiques transparentes, par exemple avec du poly (chlorure de vinyle) (PVC), du poly (méthacrylate de méthyle) (PMMA), du polycarbonate (PC), du polysulfonate (PS), etc., avec mise en œuvre d'une presse à mouler pourvue d'au moins une matrice à mouler, et dont les deux moitiés de moule (FO, FU) qui sont mobiles entre elles présentent, pour lumiter la cavité du moule, des nervures (RS) annulaires situées l'une en face de l'autre et réalisant une fente d'écrasement, dans lequel, au cours d'un cycle de moulage, et successivement, la matière plastique pâteuse est injectée, par l'intermédiaire d'une ouverture centrale (MZ) d'une moitié de moule (FO) et en formant une boulette, dans le moule chauffé et ouvert pour former une fente, est conformée en un disque-mémoire (SP) par fermeture du moule, et ledit disque-mémoire étant enlevé du moule par refroidissement et ouverture de ce dernier, caractérisé par le fait que la température d'injection de la matière plastique à mouler en un disque-mémoire (SP) dépasse considérablement la température de moulage des moules (FO, FU), qu'en outre le moulage de la boulette de matière (MK) a lieu par fermeture du moule jusqu'à une largeur de la fente d'écrasement (QB) ayant un ordre de grandeur d'environ 50% de l'épaisseur du disque-mémoire terminé, et débute avant la fin de l'opération d'injection, alors qu'ensuite démarre l'opération de refroidissement, avant la fin de l'opération de moulage, et que le déroulement, dans le temps, de l'opération de fermeture et de refroidissement a lieu, respectivement en première approximation, suivant une fonction exponentielle avec une vitesse initiale de fermeture rapide et modification de la température.

2. Procédé selon la revendication 1, caractérisé par le fait que l'unité d'injection (SE) qui plastifie le matériau à mouler et à injecter dans le moule (FO, FU), est intégrée dans la presse, en vue d'obtenir un trajet de transport aussi court que possible pour la matière.

3. Procédé selon la revendication 1 ou 2, caractérisé par le fait que la cavité du moule qui est limitée par les nervures annulaires (RS) est conformée de façon à ne pas présenter de saut dans le profil.

4. Procédé selon l'une des revendications précédentes, caractérisé par le fait que le dosage de la quantité de matière à injecter par cycle de moulage dans le moule (FO, FU), possède un excédent de masse de l'ordre de grandeur de 5–8%.

5. Procédé selon l'une des revendications précédentes, caractérisé par le fait que le diamètre de la cavité du moule par rapport au diamètre nominal du disque (SD) du disque-mémoire à mouler (SP) est augmenté de plusieurs %, par exemple 5%.

6. Procédé selon l'une des revendications précédentes, caractérisé par le fait que le disque-mémoire (SP) subit, après l'opération de démoulage, une réduction de son diamètre de disque à son diamètre nominal, à l'aide d'un dispositif de découpage évitant largement les forces de cisaillement, par exemple à l'aide d'un dispositif de découpage au laser.

7. Procédé selon l'une des revendicatins précédentes, caractérisé par le fait que le début et la vitesse du refroidissement du moule, lors d'un cycle de moulage, sont choisis de telle façon que la résistance à l'écoulement trop faible pour l'établissement de la pression dans la matière à mouler et qui se présente dans la zone de la fente d'écrasement relativement grande, est compensée par un accroissement, en temps utile, de la viscosité de la masse.

8. Procédé selon l'une des revendications précédentes, caractérisé par le fait que la hauteur du jour (LH) du moule ouvert est égale à un multiple de l'épaisseur de la plaque-mémoire (SP) à mouler.

9. Procédé selon l'une des revendications précédentes, avec mise en œuvre d'un granulé PC préséché, caractérisé par le fait que le matériau PC qui a été chauffé à 300 °C est amené dans un moule (FO, FU) chauffé à environ 220 °C.

10. Procédé selon l'une des revendications précédentes, avec mise en œuvre d'un granulé PC préséché, caractérisé par le fait que la durée d'injection (SZ) se situe dans les limites entre 0,8 seconde et 3 secondes, la durée de moulage (AZ) est de 2 secondes, la durée de refroidissement (KZ) est de 25 secondes et la pression de fermeture du moule est inférieure ou égale à 1,2 MN, et que la durée de moulage ou la durée de refroidissement commence respectivement à 40–20% avant la fin de la durée d'injection ou de la durée de moulage.

**Claims**

1. A process for the production of disc-shaped, optically readable information carriers, in paticular of high storage density, consisting of transparent synthetic resin materials, for example, polyvinyl chloride (PVC), polymethyl methacrylate (PMMA), polycarbonate (PC), polysulphone (PS) etc., using a moulding press which is equipped with at least one pressing die and the two mould halfs of which (FO, FU), which can be moves relative to one another to delimit the mould cavity, are provided with annular flanges (RS) which are arranged opposite to one another and form a pinching gap, wherein successively during the course of a pressing cycle, the pasty synthetic resin material is injected so as to form a lump through a central opening (MZ) in one mould half (FO) into the heated moulding press which is opened to form a gap, is formed into a storage disc (SP) as a result of the closure of the moulding press and after the cooling and opening of the moulding press this storage disc is removed from the mould, characterised in that the injection temperature of the synthetic resin material which is to be pressed to form the storage disc (SP) substantially exceeds the pressing temperature of the moulding press (FO, FU); that, moreover, the pressing of the material lump (MK) is effected by closing the moulding press to a pinching gap width (QB) in the order of about 50% of the thickness of the finished storage disc and starts even before the termination of the material injection operation, whereupon the cooling process is started before the termination of the pressing operation; and that the time curve of the closing and cooling operation in each case in the first approximation proceeds according to an exponential function with an initially high closing rate and temperature change.

2. A process according to Claim 1, characterised in that the injection unit (SE) which renders plastic the material to be pressed and effects injection into the moulding press (FO, FU) is integrated into the press in order to achieve the shortest possible material transport path.

3. A process according to Claim 1 or 2, characterised in that the mould cavity which is delimited by the annular flanges (RS) is so designed as to have no breaks in its profile.

4. A process according to one of the preceding Claims, characterised in that the dispensing of the amount of material to be injected into the moulding press (FO, FU) during each pressing cycle has an excess in the order of 5–8%.

5. A process according to one of the preceding Claims, characterised in that the diameter of the mould cavity exceeds the theoretical diameter of the storage disc (SP) which is to be pressed by several percent, e.g. 5%.

6. A process according to one of the preceding Claims, characterised in that, after removal from the mould, the storage disc (SP) is reduced in diameter to the theoretical diameter by means of a cutting device, e.g. a laser cutting device, which largely avoids shearing forces.

7. A process according to one of the preceding Claims, characterised in that the start and rate of mould cooling in the course of a pressing cycle are so selected that the flow resistance, which is too low in the region of the relatively large pinching gap for the build-up of pressure in the material which is to be pressed, is compensated by a prompt increase in the viscosity of the material.

8. A process according to one of the preceding Claims, characterised in that the internal height (LH) of the open moulding press is several times the thickness of the storage disc (SP) which is to be pressed.

9. A process according to one of the preceding Claims using a pre-dried PC-granulate, characterised in that the PC-material, which has been heated to 300 °C, is introduced into a pressing mould (FO, FU) which has been heated to about 220 °C.

10. A process according to one of the preceding Claims using a pre-dried PC-granulate, characterised in that the injection time (SZ) lies between the limits of 0,8 sec and 3 sec, the pressing time (AZ) is 2 sec, the cooling time (KZ) is 25 sec, and the mould closing pressure $\leqslant$ 1,2 MN; and that the pressing time and cooling time each commence 40–20% prior to the termination of the injection time and pressing time respectively.

FIG 1

## FIG 2

## FIG 3

## FIG 4

## FIG 5

FIG 6

rp

RZ

FIG 7

SZ ≲ 3sec

AZ ~ 1,5sec

KZ ~ 20 sec

t0    t1  t2 t4       t5   t
          t3

FIG 8 W

SW

t0              SZ      t1      t2   t

FIG 9

Tmax

T

Te

t3  t4       KZ           t5  t